# EUROPEAN PATENT APPLICATION

(11) **EP 2 930 718 A2**
(43) Date of publication of application: **14.10.2015**
(21) Application number: 15162838.5
(22) Date of filing: 08.04.2015
(51) Int. Cl.: G11B 33/14, G11B 25/04, G11B 17/028

(54) **SEALED DISK MEDIA ENCLOSURE**

(30) Priority: 09.04.2014 US 201414249341
(71) Applicant: HGST Netherlands B.V., 1101 CM Amsterdam (NL)
(72) Inventor: Inaba, Hiroshi, San Jose, CA California 95135 (US); Matsumoto, Hiroyuki, San Jose, CA California 95135 (US); Hirayama, Yoshiyuki, San Jose, CA California 95135 (US); Matsumura, Toru, San Jose, CA California 95135 (US)
(74) Representative: Johnson, Richard Alan

(57) **Abstract**

A sealed disk media enclosure is provided. The sealed disk media enclosure in one example includes a media enclosure structure formed of a porous material and including a disk media chamber and a chamber aperture on one side of the media enclosure structure, one or more disk media located in the disk media chamber, a Diamond-Like Carbon (DLC) coating on at least a portion of the media enclosure structure, with the DLC coating preventing passage of gas molecules through the media enclosure structure, and a cover affixed to the media enclosure structure and substantially sealing the chamber aperture, wherein a predetermined gas or gas mixture is sealed within the disk media chamber.

## Description

### BACKGROUND OF THE INVENTION

### Field of the Invention

Aspects of the disclosure are related to the field of data storage systems, and in particular, to a sealed disk media enclosure.

### Description of the Related Art

Hard Disk Drives (HDDs) comprise electronic storage devices that store digital information. A HDD includes one or more disks. The disks typically comprise optical or magnetic media that can store large quantities of digital information. The disks are rotated in order to read or write digital information on the disk or disks.

A problem that can occur in a HDD device is oxidization of the surface of a disk. A layer of oxidization can interfere with reads from or writes to a disk. The oxidization does not have to be significantly thick in order to interfere with read and write operations of a disk. Consequently, manufacturers of HDD devices take measures to remove oxygen and/or moisture within a HDD device and to prevent oxygen and moisture from penetrating into HDD devices.

A past approach to preventing oxidization has been to seal the HDD device. However, generating an air-tight HDD enclosure for the lifetime of the HDD device has been problematic.

### SUMMARY OF THE INVENTION

A sealed disk media enclosure is provided. The sealed disk media enclosure in one example includes a media enclosure structure formed of a porous material and including a disk media chamber and a chamber aperture on one side of the media enclosure structure, one or more disk media located in the disk media chamber, a Diamond-Like Carbon (DLC) coating on at least a portion of the media enclosure structure, with the DLC coating preventing passage of gas molecules through the media enclosure structure, and a cover affixed to the media enclosure structure and substantially sealing the chamber aperture, wherein a predetermined gas or gas mixture is sealed within the disk media chamber. The predetermined gas or gas mixture minimizes the presence and effect of water and oxygen in the interior of the disk media storage system.

### BRIEF DESCRIPTION OF THE DRAWINGS

Figure 1 shows an exemplary disk media storage system.
Figure 2 shows a section view AA of the disk media storage system of Figure 1.
Figure 3 shows another section view AA of the disk media storage system of Figure 1.
Figure 4 shows another exemplary disk media storage system.
Figure 5 shows a section view AA of the disk media storage system of Figure 4.
Figure 6 is a graph of a steel use stainless (SUS) cover plate, showing atomic content versus sputter time.
Figure 7 is another graph of the SUS cover plate, wherein carbon content is much greater.

### DETAILED DESCRIPTION OF THE INVENTION

The following description and associated drawings teach the best mode of the invention. For the purpose of teaching inventive principles, some conventional aspects of the best mode may be simplified or omitted. The following claims specify the scope of the invention. Some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by claims and their equivalents.

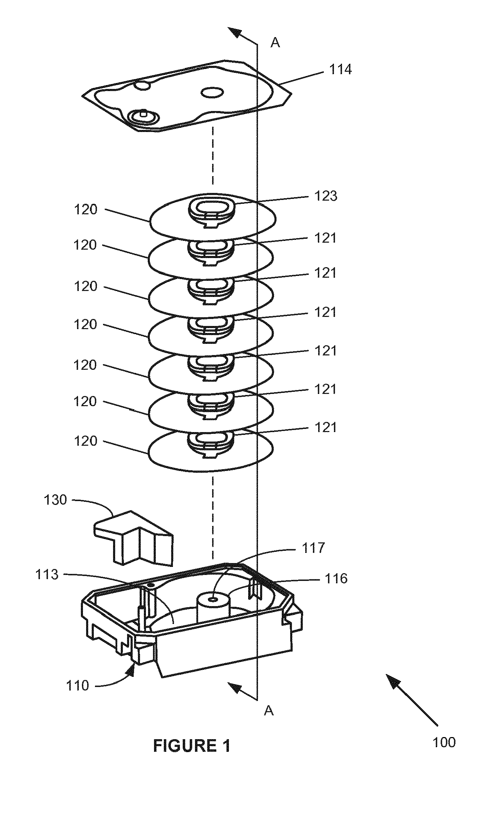

Figure 1 shows an exemplary disk media storage system 100. The disk media storage system 100 in some examples comprises a Hard Disk Drive (HDD) that includes one or more disk media 120. The disk media storage system 100 includes a media enclosure structure 110, a disk media chamber 113 formed in the media enclosure structure 110, a spindle base 116 formed in the disk media chamber 113 and including a shaft bore 117, one or more disk media 120 located in the disk media chamber 113 and coaxial with the shaft bore 117 of the spindle base 116, one or more corresponding spacers 121 positioned between the disks 120, a top spacer 123 located on a top disk of the one or more disk media 120, a read/write head 130 located in the disk media chamber 113 and positioned to interact with the one or more disk media 120, and a cover 140 sealingly affixed to the media enclosure structure 110. Other components can be included in the disk media storage system 100, but are omitted for clarity.

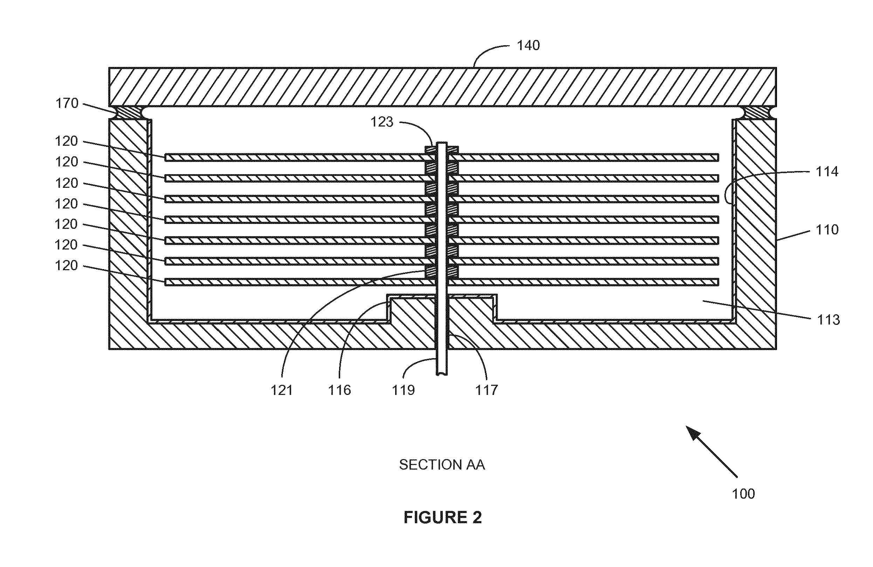

In addition to the above components, a non-porous coating 114 is formed on at least a portion of the media enclosure structure 110 (see Figures 2-5). In one example, the non-porous coating 114 comprises Diamond-Like Carbon (DLC). In another example, the non-porous coating 114 comprises amorphous carbon. Amorphous carbon comprises a subset of DLC.

DLC exists in many variations and forms of carbon materials that display some of the typical properties of diamond. The forms of DLC are usually applied as coatings on other materials, and all DLC forms contain significant amounts of sp³ hybridized carbon atoms. By mixing the two crystalline carbon polytypes in various ways at the nanoscale level of structure, DLC coatings can be formed that are amorphous, flexible, and yet purely sp³ bonded, like diamond. The hardest, strongest, and slickest of the forms of DLC is a mixture known as tetrahedral amorphous carbon (ta-C). The ta-C form of DLC is considered the pure form of DLC, consisting only of sp³ bonded carbon atoms.

The non-porous coating 114 can be formed on an internal surface or surfaces of the media enclosure structure 110. Alternatively, or in addition, the non-porous coating 114 can be formed on an external surface or surfaces of the media enclosure structure 110.

The one or more disk media 120 can comprise multiple disks that are independently read and written. Alternatively, the disk media storage system 100 can comprise a Redundant Array of Inexpensive/Independent Disks (RAID) unit, where data is simultaneously read and written to each disk.

The one or more disk media 120 can comprise optical disks, where an optical beam is used to read and write data on the one or more disk media 120. Alternatively, the one or more disk media 120 can comprise magnetic disks, where magnetic flux is used to read and write data on the one or more disk media 120. However, the one or more disk media 120 can comprise any suitable disk media.

Oxidization is a concern for disk media, where even a thin layer of oxidization on the one or more disk media 120 can interfere with disk read and write operations. Therefore, in order to minimize the presence of oxygen and/or water particles inside the disk media storage system 100, the disk media chamber 113 in some examples is sealed and filled with a predetermined gas or gas mixture. The predetermined gas or gas mixture can comprise an inert gas, such as helium gas, for example. If the disk media chamber 113 is filled with substantially pure helium gas, the danger of oxidization within the disk media storage system 100 is minimized.

The inert gas prevents or minimizes the oxidization of the disk media 120. Further, the non-porous coating 114 can comprise an anti-oxidant coating that inhibits oxidization within the disk media chamber 113, for example.

In addition, the predetermined gas or gas mixture within the disk media chamber 113 can be at less than atmospheric pressure. The reduced pressure minimizes gas leakage and loss, especially where the gas comprises gas molecules that are smaller than air. If the gas pressure inside the disk media storage system 100 was the same as or greater than atmospheric pressure, then the gas would be driven to diffuse at a higher rate through the media enclosure structure 110.

The media enclosure structure 110 is formed of a porous material. In some examples, the media enclosure structure 110 is formed of aluminum. The media enclosure structure 110 can be formed of cast aluminum or die-cast aluminum in some examples. Alternatively, the media enclosure structure 110 can be formed of other porous materials, including porous metals or alloys, carbon composite materials, graphite, plastic, ceramics, and the like.

Aluminum is at least partially porous to gas molecules. The porosity is more pronounced where the gas within the disk media storage system 100 is at a lower than atmospheric pressure. In addition, the porosity is more pronounced where the gas comprises small molecules, such as helium gas molecules. Helium gas molecules are monatomic and the diffusion rate of helium through solids is three times that of air.

The media enclosure structure 110 is made non-porous by applying the non-porous coating 114 to at least a portion of a surface or surfaces of the media enclosure structure 110 (see Figures 2-3 and the accompanying discussion). The non-porous coating 114, in combination with the cover 140, renders the disk media storage system 100 substantially non-porous to the gas sealed inside the disk media storage system 100. The non-porous coating 114 renders the media enclosure structure 110 substantially non-porous to a helium gas.

The non-porous coating 114 in some examples comprises a DLC coating formed on a surface or surfaces of the media enclosure structure 110. In other examples, the non-porous coating 114 comprises an amorphous carbon coating.

The non-porous coating 114 can be formed on the media enclosure structure 110 using any suitable method. For example, the non-porous coating 114 can be formed on the media enclosure structure 110 by plasma assisted chemical vapor deposition (CVD), ion beam deposition, physical vapor deposition (PVD), or other types of coating formation.

The non-porous coating 114 is 1 nanometer (nm) to 10,000 nm thick in some examples. However, this thickness example is given for illustration and not limitation. The non-porous coating 114 can be formed at any suitable thickness.

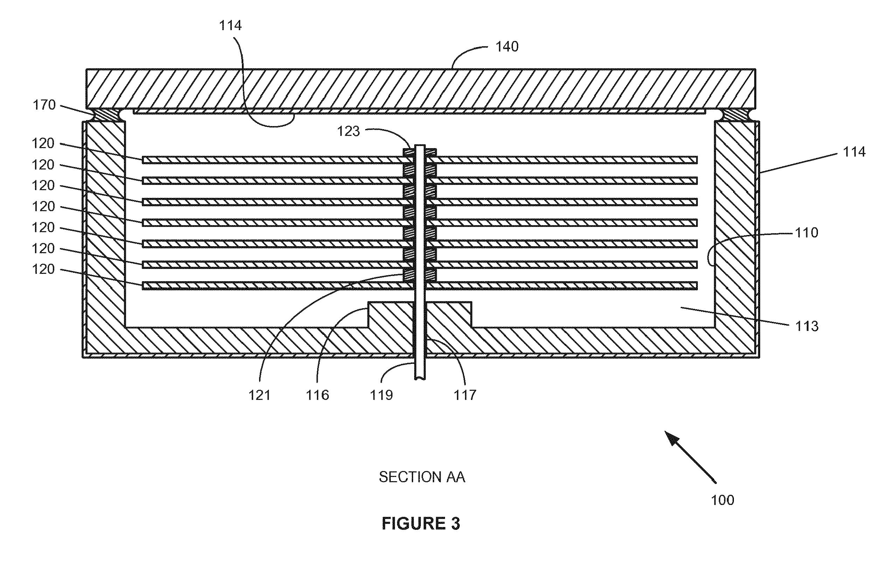

The cover 140 is substantially non-porous to gas in some examples. The cover 140 can comprise a metal cover. The cover 140 can comprise a stainless steel or steel use stainless (SUS) cover. The cover 140 can be formed of a stainless steel alloy. The cover 140 can be formed of an aluminum alloy. Alternatively, or in addition, the cover 140 can include the non-porous coating 114 on one or both of an internal cover surface or an external cover surface (see Figure 3).

The cover 140 is sealingly affixed to the media enclosure structure 110 in order to render the disk media storage system 200 substantially gas-tight. The cover 140 can be welded to the media enclosure structure 110 in some examples, including laser welding or any other suitable welding type. Alternatively, the cover 140 can be sealingly affixed to the media enclosure structure 110 in other ways, such as by adhesives or bonding agents, a gasket and fasteners, or using any other suitable affixation method or affixation devices. The cover 140 can be affixed to the media enclosure structure 110 before or after the non-porous coating 114 has been formed on the media enclosure structure 110. In addition, the cover 140 can be affixed to the media enclosure structure 110 before or after the non-porous coating 114 has been formed on the cover 140.

Figure 2 shows a section view AA of the disk media storage system 100 of Figure 1. The disk media storage system 100 in this example includes the media enclosure structure 110, the disk media chamber 113 formed in the media enclosure structure 110, and the spindle base 116 formed in the disk media chamber 113. To minimize the presence and effect of oxygen and/or water particles inside the disk media storage system 100, the disk media chamber 113 in some examples is sealed and filled with a predetermined gas or gas mixture. The spindle base 116 includes the shaft bore 117, with the shaft bore 117 receiving the shaft 119 that rotates the one or more disk media 120. The one or more disk media 120 are located in the disk media chamber 113 and are coaxial with the shaft bore 117 of the spindle base 116. Spacers 121 are positioned between individual disk media 120. A top spacer 123 is located on a top disk of the one or more disk media 120, wherein the spacers 121 and the top spacer 123 hold the one or more disk media 120 in a predetermined spacing. The read/write head 130 is not shown for clarity.

The cover 140 has been sealingly affixed to the media enclosure structure 110 in order to seal the media enclosure structure 110 and make the disk media storage system 100 substantially gas-tight. The non-porous coating 114 has been formed on an internal surface or surfaces of the disk media chamber 113. As before, the sealed disk media chamber 113 is filled with the predetermined gas or gas mixture. The non-porous coating 114 makes the media enclosure structure 110 substantially non-porous to gas molecules, even to small gas molecules such as helium gas molecules, for example. The predetermined gas or gas mixture therefore cannot diffuse through the media enclosure structure 110.

The cover 140 can be welded to the media enclosure structure 110 in some examples, including laser welding or any other suitable welding type, as previously discussed. The size of the weld 170 is exaggerated in the figure for clarity. In addition, the weld 170 may be formed of material from the media enclosure structure 110 and/or the cover 140, and may not comprise externally supplied weld material. Alternatively, a seal 170 can be positioned between the media enclosure structure 110 and the cover 140.

Figure 3 shows another section view AA of the disk media storage system 100 of Figure 1. In this example, the disk media storage system 100 includes the non-porous coating 114 on an external surface or surfaces of the media enclosure structure 110. In addition, the disk media storage system 100 can optionally include the non-porous coating 114 on an external or internal surface or surfaces of the cover 140. The non-porous coating 114 performs the same function as in Figure 2, preventing gas molecules from passing through and escaping from the media enclosure structure 110. The media enclosure structure 110 is also filled with a predetermined gas or gas mixture in order to minimize the effect of water and oxygen inside the disk media storage system 100.

As previously discussed, the media enclosure structure 110 can be sealed by the cover 140 affixed to the media enclosure structure 110. The cover 140 can be substantially non-porous to gas. The cover 140 can include the non-porous coating 114, as previously discussed. In some examples, the non-porous coating 114 can be formed on the entire external surface or surfaces of the media enclosure structure 110. In other examples, the non-porous coating 114 can be formed on external surfaces including the cover 140 and the weld or seal 170 (not shown).

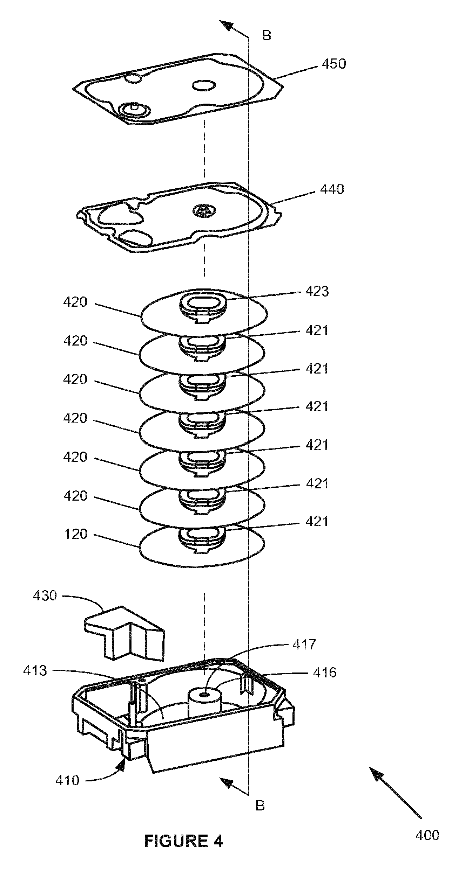

Figure 4 shows another exemplary disk media storage system 400. The disk media storage system 400 in some examples comprises a Hard Disk Drive (HDD) that includes one or more disk media 420. The disk media storage system 400 includes a media enclosure structure 410, a disk media chamber 413 formed in a spindle base 416 formed in the media enclosure structure 410, a shaft bore 417 formed in the spindle base 416, one or more disk media 420 located in the disk media chamber 413 and coaxial with the shaft bore 417, one or more spacers 421 positioned between the disks 420, and a top spacer 423 located on a top disk of the one or more disk media 420. A read/write head 430 is located in the disk media chamber 413 and positioned to interact with the one or more disk media 420. Other components can be included in the disk media storage system 400, but are omitted for clarity.

The disk media storage system 400 in this example additionally includes a first cover 440 and a second cover 450, instead of the single cover 140 of Figures 1-3. The first cover 440 is sealingly affixed to the media enclosure structure 410. The second cover 450 likewise is sealingly affixed to the media enclosure structure 410 and is spaced-apart from the first cover 440. The first cover 440 forms a first chamber 443 within the disk media chamber 413. The first cover 440 and the second cover 450 together form a second chamber 453 within the disk media chamber 413.

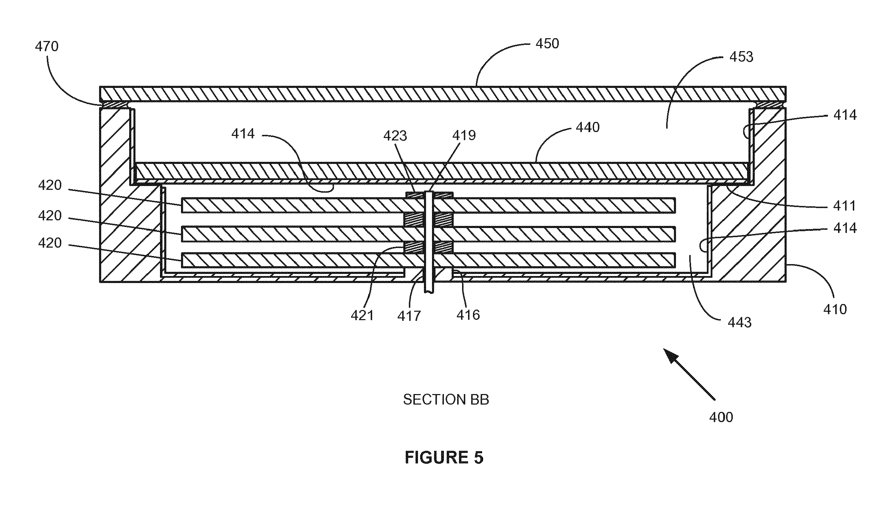

Figure 5 shows a section view BB of the disk media storage system 400 of Figure 4. The disk media storage system 400 in this example includes a media enclosure structure 410, the first chamber 443 formed in the media enclosure structure 410, and the second chamber 453 formed in the media enclosure structure 410. Spacers 421 are positioned between individual disk media 420. A top spacer 423 is located on a top disk of the one or more disk media 420, wherein the spacers 421 and the top spacer 423 hold the one or more disk media 420 in a predetermined spacing. The read/write head 430 is not shown for clarity.

The first cover 440 has been sealingly affixed to the media enclosure structure 410 in order to seal the media enclosure structure 410 and make the disk media storage system 400 substantially gas-tight. The first cover 440 can be affixed to a sidewall of the media enclosure structure 410, including to a shoulder 411 or projection in the sidewall. The non-porous coating 414 has been formed on an internal surface or surfaces of the first chamber 443 in this example. As before, the sealed first chamber 443 is filled with a predetermined gas or gas mixture. The non-porous coating 414 makes the first chamber 443 substantially non-porous to gas, as previously discussed. The predetermined gas or gas mixture cannot diffuse through the media enclosure structure 410. As previously discussed, the non-porous coating 414 can alternatively or additionally be formed on an external surface or surfaces of the media enclosure structure 410.

The first cover 440 can be welded to the media enclosure structure 410 in some examples, including laser welding or any other suitable welding type, as previously discussed. The size of the weld 470 is exaggerated in the figure for clarity. In addition, the weld 470 may be formed of material from the media enclosure structure 410 and/or the first cover 440, and may not comprise externally supplied weld material in some examples. Alternatively, a seal (not shown) can be positioned between the media enclosure structure 410 and the first cover 440.

In addition, the non-porous coating 414 can optionally be formed on an internal surface or surfaces of the second chamber 453 in some examples. Consequently, the second chamber 453 can also be substantially non-porous to the predetermined gas or gas mixture.

The second chamber 453 can be filled with a same gas or gas mixture as is sealed in the first chamber 443. Alternatively, the second chamber 453 can be filled with a different gas or gas mixture. The second chamber 453 can be filled with a gas or gas mixture that is at substantially the same pressure as the gas or gas mixture in the first chamber 443. Alternatively, the gas or gas mixture in the second chamber 453 can be at a different pressure than the gas or gas mixture in the first chamber 443.

The second cover 450 has also been affixed to the media enclosure structure 410. In some examples, the second cover 450 is sealingly affixed to the media enclosure structure 410, similar to the first cover 440. The second cover 450 is spaced-apart from the first cover 440 and forms the second chamber 453 between the first cover 440 and the second cover 450.

The gas in the second chamber 453 can be at a same or different pressure from the gas in the first chamber 443 in order to reduce the possibility of air and/or moisture penetrating into the first chamber 443 and causing oxidization of the one or more disk media 420 (and/or other electronic components). Where the gas pressure in the second chamber 453 is greater than the gas pressure in the first chamber 443 (such as where the pressure in the first chamber 443 is less or much less than atmospheric pressure), there is less likelihood of gas in the second chamber 453 escaping to the outside. Likewise, there is less likelihood of air and/or moisture penetrating into the second chamber 453, such as where the gas pressure in the second chamber 453 is similar to an atmospheric pressure *(i.e.,* a low gas pressure in the second chamber 453 is more likely to cause leakage due to a relatively large pressure gradient between the second chamber 453 and the outside air).

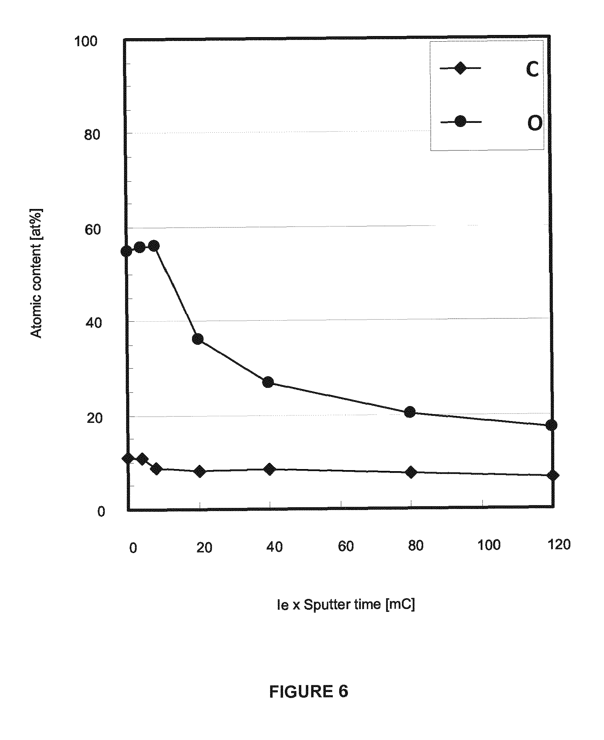

Figure 6 is a graph of a steel use stainless (SUS) cover plate, showing atomic content versus sputter time. The figure shows percent atomic content for both carbon (C) and oxygen (O). It can be seen in the graph that the oxygen level is significant.

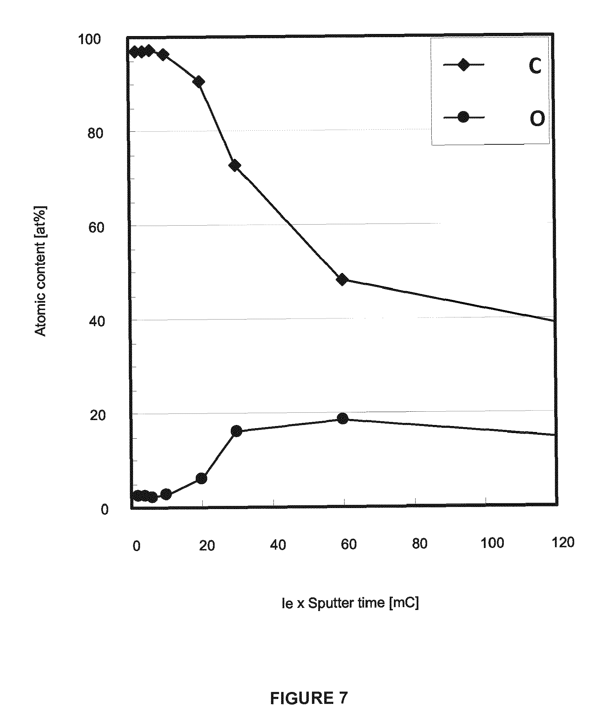

Figure 7 is another graph of the SUS cover plate, wherein carbon content is much greater. Consequently, the oxygen level is greatly reduced in this scenario.

While the present invention has been particularly shown and described with reference to the preferred implementations, it will be understood by those skilled in the art that various changes in form and detail may be made without departing from the spirit and scope of the invention. Accordingly, the disclosed invention is to be considered merely as illustrative and limited in scope only as specified in the appended claims.

## Claims

1. A sealed disk media enclosure, comprising:
a media enclosure structure formed of a porous material and including a disk media chamber and a chamber aperture on one side of the media enclosure structure;
one or more disk media located in the disk media chamber;
a Diamond-Like Carbon (DLC) coating on at least a portion of the media enclosure structure, with the DLC coating preventing passage of gas molecules through the media enclosure structure; and
a cover affixed to the media enclosure structure and substantially sealing the chamber aperture, wherein a predetermined gas or gas mixture is sealed within the disk media chamber.

2. The sealed disk media enclosure of claim 1, with the DLC coating extending over an internal surface or surfaces of the disk media chamber.

3. The sealed disk media enclosure of claim 1, with the disk media chamber being filled with the predetermined gas or gas mixture at a less than atmospheric pressure.

4. The sealed disk media enclosure of claim 1, with the cover being coated with the DLC coating.

5. A sealed disk media enclosure, comprising:
a media enclosure structure formed of aluminum and including a disk media chamber and a chamber aperture on one side of the media enclosure structure;
one or more disk media located in the disk media chamber;
a Diamond-Like Carbon (DLC) coating on at least a portion of the media enclosure structure, with the DLC coating preventing passage of gas molecules through the media enclosure structure;
a first cover affixed to the media enclosure structure within the disk media chamber and forming a first chamber, wherein a predetermined gas or gas mixture is sealed within the first chamber; and
a second cover affixed to the media enclosure structure and substantially sealing the chamber aperture, with the second cover being spaced-apart from the first cover and forming a second chamber between the first cover and the second cover.

6. The sealed disk media enclosure of claim 5, with the DLC coating extending over an internal surface or surfaces of one or both of the first chamber or the second chamber.

7. The sealed disk media enclosure of claim 5, with the first chamber being filled with the predetermined gas or gas mixture at a less than atmospheric pressure.

8. The sealed disk media enclosure of claim 5, with one or both of the first cover or the second cover being coated with the DLC coating.

9. A method of making a sealed disk media enclosure, comprising:
forming a media enclosure structure of a porous material including a disk media chamber and a chamber aperture on one side of the media enclosure structure;
coating at least a portion of the media enclosure structure with a Diamond-Like Carbon (DLC) coating, with the DLC coating preventing passage of gas molecules through the media enclosure structure;
providing one or more disk media in the disk media chamber; and
affixing a cover to the media enclosure structure and substantially sealing the chamber aperture, wherein a predetermined gas or gas mixture is sealed within the disk media chamber.

10. The sealed disk media enclosure of claim 1 or 5 or the method of claim 9, with the DLC coating comprising an amorphous carbon coating.

11. The method of claim 9, with the DLC coating extending over an internal surface or surfaces of the disk media chamber.

12. The sealed disk media enclosure of claim 1 or 5 or the method of claim 9, with the DLC coating extending over an external surface or surfaces of the media enclosure structure.

13. The method of claim 9, with the disk media chamber being filled with the predetermined gas or gas mixture at a less than atmospheric pressure.

14. The sealed disk media enclosure of claim 1 or 5 or the method of claim 9, with the predetermined gas or gas mixture comprising helium gas.
